# EUROPÄISCHE PATENTSCHRIFT

(11) **EP 1 219 489 B1**
(45) Veröffentlichungstag und Bekanntmachung des Hinweises auf die Patenterteilung: **31.12.2008**
(21) Anmeldenummer: 01126823.2
(22) Anmeldetag: 10.11.2001
(51) Int. Cl.: F02D 41/26, B60W 10/00, G05B 9/03

(54) **System und Verfahren zur Steuerung und/oder überwachung eines wenigstens zwei Steuergeräte aufweisenden Steuergeräteverbunde**
System and method for controlling and/or monitoring a control device comprising at least two controllers
Système et procédé de commande et/ou surveillance d'un ensemble comportant au moins deux contrôleurs

(30) Priorität: 28.12.2000 DE 10065118
(43) Veröffentlichungstag der Anmeldung: 03.07.2002
(73) Patentinhaber: ROBERT BOSCH GMBH, 70442 Stuttgart (DE)
(72) Erfinder: Crispin, Norbert, 71638 Ludwigsburg (DE); Haas, Wolfgang, 70825 Korntal-Münchingen (DE); Frank, Andreas, 71063 Sindelfingen (DE); Meier, Thomas, 75428 Illingen (DE)

(56) Entgegenhaltungen:
- DE-A- 3 934 974
- DE-A- 4 133 268
- US-A- 5 880 568

## Beschreibung

Die vorliegende Erfindung betrifft ein System und ein Verfahren zur Steuerung und/oder Überwachung eines wenigstens zwei Steuergeräte aufweisenden Steuergeräteverbundes nach dem Oberbegriff der Patentansprüche 1 bzw. 6.

Für die Realisierung neuer Funktionen in der Kraftfahrzeugelektronik ist das zunehmend intensivere Zusammenspiel einzelner Steuergeräte von besonderer Bedeutung.

Moderne Fahrzeugausstattungen umfassen mehrere digitale Steuergeräte, beispielsweise für die Zündung/Einspritzung, ABS und Getriebesteuerung. Vorteilhafte Eigenschaften und zusätzliche Funktionen lassen sich dadurch realisieren, daß die von den einzelnen Steuergeräten kontrollierten Prozesse synchronisiert und ihre Parameter laufend, d. h. insbesondere in Echtzeit, aufeinander abgestimmt werden. Ein Beispiel für eine solche Funktion ist die Antriebsschlupfregelung, die bei durchdrehenden Antriebsrädern das Antriebsmoment der einzelnen Räder entsprechend reduziert.

Der Informationsausstausch zwischen den Steuergeräten erfolgte herkömmlicherweise im wesentlichen über Einzelleitungen. Solche Punkt-zu-Punkt-Verbindungen lassen sich jedoch nur für eine begrenzte Anzahl von Signalen vorteilhaft einsetzen. Eine einfache, automobilgerechte Netzwerktopologie zur seriellen Übertragung von Daten zwischen den Steuergeräten kann hierbei die Übertragungsmöglichkeiten erweitern.

Die sich abzeichnende erhebliche Zunahme des Datenaustauschs zwischen den elektronischen Komponenten kann mit herkömmlichen Verkabelungstechniken (Kabelbaum) nicht mehr bewältigt werden, da beispielsweise ein Kabelbaum unter anderem bei Oberklassefahrzeugen wegen seines Umfangs kaum mehr zu handhaben ist und auch zu viele PINs an einigen Steuergeräten vorhanden wären. Diese Probleme können durch den Einsatz von CAN gelöst werden, einem speziell für den Kfz-Einsatz konzipierten seriellen Bussystem.

Als wesentliches Einsatzgebiet für CAN ergibt sich im Kraftfahrzeugbereich die Steuergerätekopplung: Bei der Steuergerätekopplung werden elektronische Systeme wie Motronik, elektronische Getriebesteuerung, elektronische Motorleistungssteuerung (EMS, "E-Gas") und Antriebsschlupfregelung (ASR) miteinander gekoppelt. Typische Übertragungsraten bewegen sich zwischen ca. 120 kBit/s und 1 MBit/s. Sie müssen hoch genug sein, um das geforderte Echtzeitverhalten gewährleisten zu können. Ein Vorteil des seriellen Datenübertragungsmediums gegenüber konventionellen Schnittstellen wie Tastverhältnissen, Schaltsignalen und Analogsignalen ist die höhere Geschwindigkeit ohne große Belastung der Steuergeräte-Zentraleinheiten (CPU). Außerdem werden weniger PINs an den Steuergeräten benötigt.

Defekte Steuergeräte können den Busverkehr erheblich belasten und auch zu sicherheitskritischen Zuständen führen. Deshalb sind beispielsweise CAN-Controller mit Mechanismen ausgestattet, die gelegentlich auftretende Störungen von anhaltenden Störungen unterscheiden und Stationsausfälle (Steuergeräteausfälle) lokalisieren können. Dies geschieht in der Regel über eine statistische Auswertung von Fehlersituationen.

Aus der DE-OS 41 33 268 ist eine Vorrichtung zur Steuerung der Antriebsleistung eines Fahrzeugs bekannt. Diese Vorrichtung umfaßt eine erste Steuereinheit zur Steuerung der einzuspritzenden Kraftstoffmenge und eine zweite Steuereinheit zur Steuerung der Drosselklappenstellung. Des weiteren ist eine Meßeinrichtung zur Erfassung beispielsweise der Drehzahl des Fahrzeugs vorgesehen, wobei diese Meßeinrichtung wenigstens zwei zueinander redundante Sensoren umfaßt. Die erste Steuereinheit wertet das Signal des ersten Sensors, und die zweite Steuereinheit das Ausgangssignal eines weiteren Sensors der Meßeinrichtung aus. Die beiden Signale werden von einer der Steuereinheiten auf Plausibilität überprüft.

Mittels dieser Vorrichtung ist lediglich die Überprüfung der Sensorsignale bzw. des Sensors möglich. Ein Fehler im Bereich eines Steuergeräts bzw. der Signalübertragung zwischen den Steuergeräten kann mit dieser Einrichtung nicht erkannt werden.

Dokument DE-A-3934974 beschreibt ein System zur Steuerung und/oder Überwachung eines wenigstens zwei Steuergeräte aufweisenden Steuergeräteverbundes, mit einem ersten Steuergerät (10) und wenigstens einem zweiten Steuergerät (20), wobei das erste Steuergerät (10) mit Mitteln zur Durchführung seiner Steuerfunktion und zur Überwachung dieser Steuerfunktion, sowie mit Mitteln zur Überwachung der Steuerfunktion des wenigstens einen zweiten Steuergeräts (11,12,13) ausgebildet ist.

Aus der DE 44 37 336 A1 ist ein Verfahren zur Steuerung einer Brennkraftmaschine, insbesondere einer Dieselbrennkraftmaschine, mit wenigstens einem mengenbestimmenden Stellglied, bekannt, wobei eine erste Steuereinheit abhängig von ersten Größen eine Kraftstoffmengengröße vorgibt und eine zweite Steuereinheit ausgehend von der Kraftstoffmengengröße und weiteren Größen eine Stellgröße für das Stellglied bestimmt. Dieses Verfahren zeichnet sich dadurch aus, daß die zweite Steuereinheit die Stellgröße an die erste Steuereinheit zurückmeldet, und die erste Steuereinheit die Stellgröße und die Kraftstoffmengengröße miteinander auf eine Unplausibilität vergleicht.

Aus der DE 44 38 714 A1 ist schließlich ein Verfahren und eine Vorrichtung zur Steuerung der Antriebsleistung eines Fahrzeugs bekannt, wobei zur Leistungssteuerung lediglich ein Rechenelement (Mikrocomputer) zur Durchführung von Steuerungsfunktionen und Überwachungsfunktionen vorgesehen ist. Im Mikrocomputer sind dabei wenigstens zwei unabhängige Ebenen festgelegt, wobei eine erste Ebene die Steuerfunktionen, und eine zweite Ebene die Überwachungsfunktionen durchführt.

Mit der vorliegenden Erfindung soll ein einfaches Überwachungskonzept für ein Kraftfahrzeug mit verschiedenen miteinander kooperierenden Steuergeräten bzw. Rechenelementen, bei welchen im Fehlerfall sicherheitskritische Zustände entstehen können, bereitgestellt werden. Es wird angestrebt, derartige sicherheitskritische Zustände zu erkennen und gegebenenfalls Gegenmaßnahmen, beispielsweise eine Notsteuerung oder ein Abschalten eines als defekt erkannten Steuergerätes, einzuleiten. Ziel hierbei ist insbesondere, den Hardwareaufwand gering zu halten.

Diese Aufgabe wird gelöst durch ein System mit den Merkmalen des Patentanspruchs 1 sowie ein Verfahren mit den Merkmalen des Patentanspruchs 6.

Mittels des vorgestellten Konzeptes, welches dem erfindungsgemäßen System und dem erfindungsgemäßen Verfahren zugrundeliegt, ist die Überwachung eines Verbundes von Steuergeräten unter Verwendung nur eines eigensicheren Steuergerätes, welches sich selbst und die übrigen Steuergeräte überwacht, realisierbar. Die erfindungsgemäße Vorgehensweise führt insgesamt zu einem System, welches gegenüber herkömmlichen Systemen einen wesentlich geringeren Hardwareaufwand erfordert und somit kostengünstiger bereitstellbar ist. Die Anzahl von Steuergeräten, welche zur Gewährleistung eines sicheren Betriebes eines Kraftfahrzeugs mit mehreren Betriebsebenen ausgestattet sein muß, läßt sich auf ein Minimum reduzieren, da erfindungsgemäß lediglich eines der verwendeten Steuergeräte die Überwachungsfunktion für sämtliche Steuergeräte des Gesamtverbundes übernimmt. Das erfindungsgemäße Konzept eignet sich insbesondere zur Steuerung einer Antriebseinheit eines Kraftfahrzeuges, insbesondere zur Steuerung einer Brennkraftmaschine.

Vorteilhafte Ausgestaltungen des erfindungsgemäßen Systems bzw. des erfindungsgemäßen Verfahrens sind Gegenstand der Unteransprüche.

Die Mittel zur Durchführung der Steuerfunktion des ersten Steuergeräts und zur Überwachung dieser Steuerfunktion sowie die Mittel zur Überwachung der Steuerfunktionen des wenigstens einen zweiten Steuergeräts sind als Mikrocomputer ausgebildet, welcher wenigstens zwei zumindest außerhalb des Fehlerfalls voneinander unabhängige Betriebsebenen aufweist, wobei in einer ersten Ebene die Steuerungsfunktion und Überwachungsfunktion des ersten Steuergeräts, und in einer zweiten Ebene die Überwachungsfunktion für das wenigstens eine zweite Steuergerät durchgeführt wird. Derartige Betriebsebenen sind als zumindest außerhalb des Fehlerfalls gegenseitig in ihrer Funktion sich nicht beeinflussende Kanäle innerhalb des Mikrocomputers ausgebildet. So kann unter Verwendung nur eines Mikrocomputers eine mit einem Steuersystem mit zwei Recheneinheiten bzw. Mikrocomputern für jedes Steuergerät vergleichbare Betriebssicherheit und Verfügbarkeit erreicht werden. Es sei angemerkt, daß die Definition der Betriebsebenen auch auf andere Weise erfolgen kann: Es ist beispielsweise denkbar, die Steuerungsfunktion des ersten Steuergeräts in einer ersten, und sämtliche Überwachungsfunktionen in einer zweiten Betriebsebene zu organisieren.

Gemäß einer bevorzugten Ausführungsform des erfindungsgemäßen Systems ist eine dritte Betriebsebene vorgesehen, welche die Funktionsweise des ersten Steuergeräts bzw. des diesem zugeordneten Mikrocomputers durch Überwachung der die Überwachung durchführenden zweiten Ebene überprüft. Eine derartige Überwachung erhöht die Betriebssicherheit des Systems erheblich. Dabei ist es beispielsweise von Vorteil, einen aktiven Watch-Dog zu verwenden, der die Ablaufkontrolle als Frage-Antwort-Spiel durchführen kann.

Zweckmäßigerweise sind Sensoren vorgesehen, welche im Normalzustand als redundante Sensoren für das wenigstens eine zweite Steuergerät dienen, und bei Erkennen einer Fehlfunktion des zweiten Steuergeräts dem ersten Steuergerät zur Gewährleistung einer Notlauffunktion bezüglich der Steuerfunktion des wenigstens einen zweiten Steuergeräts zuordnenbar sind. Durch eine derartige redundante Sensorik, welche im Falle einer Fehlfunktion durch das erste, eigensichere Steuergerät auswertbar ist, ist es auch möglich, unterschiedliche sichere Zustände der Aktuatorik des wenigstens einen zweiten Steuergeräts anzusteuern. Mittels derartiger Sensoren ist es möglich, im Fehlerfall des zweiten Steuergeräts den für den aktuellen Betriebspunkt des zweiten Steuergeräts sicheren Zustand in optimaler Weise einzustellen.

Zweckmäßigerweise umfaßt die Einleitung von Sicherheits- oder Notmaßnahmen die Abschaltung der Aktuatorik des wenigstens einen zweiten Steuergeräts und/oder die Abschaltung des wenigstens einen zweiten Steuergeräts.

Gemäß einer besonders bevorzugten Ausbildung des erfindungsgemäßen Systems ist eine zentrale Notlaufsignalleitung, über welche die einzelnen Steuergeräte miteinander verbunden sind, vorgesehen. Diese Maßnahme erweist sich insbesondere im Falle von zusammengesetzten Einheiten, beispielsweise dem Triebstrang des Kraftfahrzeugs, die einen gemeinsamen sicheren Zustand aktiv ansteuern müssen, als vorteilhaft. Arbeiten sämtliche Steuergeräte des Triebstrangs im normalen Betrieb, versorgt keines der Steuergeräte diese Notlaufsignalleitung. Erkennt jedoch eines der Steuergeräte einen Fehler, schaltet es sich ab und versorgt dadurch die Notlaufsignalleitung. In einem Steuergerät wird diese Notlaufsignalleitung inaktiv versorgt, d. h. die Versorgung der Notlaufsignalleitung muß das Steuergerät im Normalbetrieb aktiv unterdrücken.

Die Aktuatorik, welche mit dieser Leitung verbunden ist, fährt in Notlaufposition, wenn die Leitung angesteuert wird. Eine Ansteuerung durch das angeschlossene Steuergerät hat keinen Einfluß mehr auf die Aktuatorik, das Steuergerät hat eine niedrigere Priorität. Diese Notlaufstrategie ist vorzugsweise in Hardware realisierbar, wodurch eine höhere Zuverlässigkeit erzielbar ist. Beispielsweise ist es bei einem Triebstrang möglich, im Fehlerfall mit einem Zeitrelais, welches durch diese Notlaufsteuerung angesteuert wird, die Kupplung beispielsweise fünf Sekunden in Richtung auf "auf" zu fahren.

Die Erfindung wird nun anhand der beigefügten Zeichnung weiter erläutert. In dieser zeigt
- Figur 1: ein Blockschaltbild zur Darstellung einer bevorzugten Ausführungsform der erfindungsgemäßen Vorrichtung, und
- Figur 2: eine schematische Darstellung zur Erläuterung einer besonders bevorzugten Ausführungsform des erfindungsgemäßen Verfahrens.

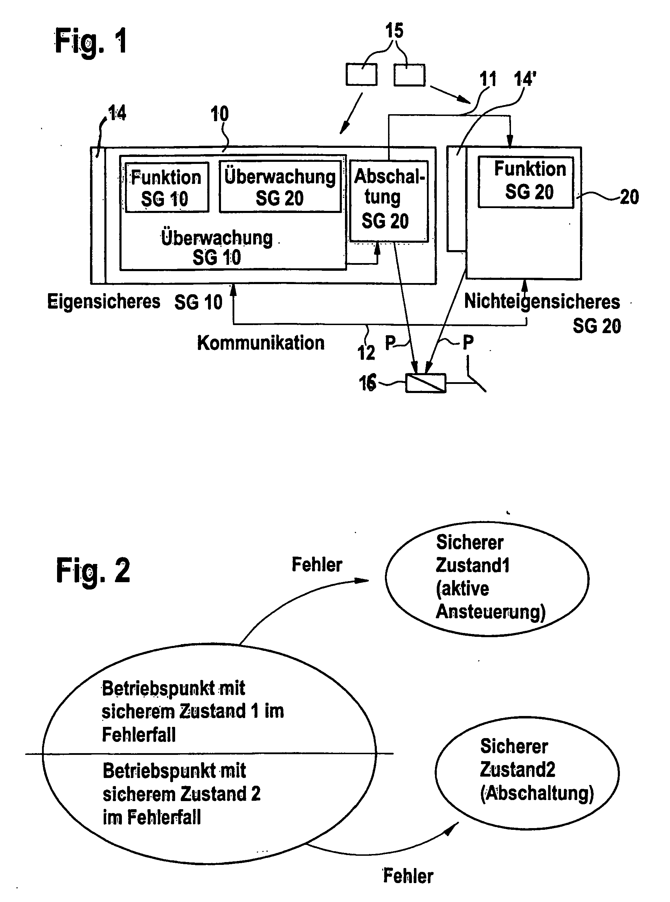

In Figur 1 ist ein Übersichtsblockschaltbild eines zwei Steuergeräte umfassenden Systems bzw. Steuergeräteverbundes zur Steuerung der Antriebseinheit eines Kraftfahrzeugs als bevorzugte Ausführungsform der Erfindung dargestellt. Man erkennt ein erstes Steuergerät 10 und ein zweites Steuergerät 20. Beispielhaft sei davon ausgegangen, daß das Steuergerät 20 im Normalbetrieb die Kupplung und gegebenenfalls weitere Aktuatorik des Kraftfahrzeugs steuert.

Mit 12 ist in Figur 1 eine Kommunikationsverbindung zwischen den Steuergeräten 10 und 20 bezeichnet. Über die Kommunikationsverbindung 12 erfolgt die Überwachung der Steuergeräte im Verbund, sowie die normale Kommunikation. Die Kommunikationsverbindung 12 ist beispielsweise als CAN-Verbindung realisiert.

Das Steuergerät 10 besitzt mehrere Funktionen, nämlich die Ausführung seiner eigenen Steuerungsfunktion, die Überwachung dieser Steuerungsfunktion sowie eine Überwachung des Steuergeräts 20.

Ein (nicht im einzelnen dargestellter, jedoch schematisch mit 14 bezeichneter) Mikrocomputer des ersten Steuergeräts 10 ist dabei in wenigstens zwei Betriebsebenen organisiert. Eine erste Ebene (Funktion SG10) führt die Berechnungen zur Durchführung der Steuerfunktion des Steuergeräts 10 durch. Die erste Ebene umfasst ferner die Überwachung des zweiten Steuergeräts (Überwachung SG20). In einer zweiten Ebene (Überwachung SG10) wird die Steuerfunktion des ersten Steuergeräts überwacht.

Stellt das erste Steuergerät 10 eine Fehlfunktion des zweiten Steuergeräts 20 fest, schaltet das Steuergerät 10 über eine Ausgangsleitung 11 das Steuergerät 20 ab bzw. stromlos. Da die Kupplung, welche durch das Steuergerät 20 gesteuert wird, in Abhängigkeit von der Fahrzeuggeschwindigkeit betätigt bzw. geschlossen werden soll, übernimmt das Steuergerät 10 eine Notlauffunktion bezüglich des Steuergeräts 20. Für diese Notlauffunktion genügt eine rudimentäre Ansteuerung. Die benötigten Eingangsgrößen zur Erfüllung der Notlauffunktion der im Normalbetrieb von dem Steuergerät 20 gesteuerten Kupplung erhält das Steuergerät 10 durch (schematisch mit 15 bezeichnete) Sensoren, die im Normalbetrieb als redundante Sensoren für das Steuergerät 20 fungieren. Ein Mikrocomputer des Steuergerätes 20 ist schematisch dargestellt und mit 14' bezeichnet.

Es muß hierbei sichergestellt sein, daß das erste Steuergerät 10, welches in der Lage ist, das wenigstens eine zweite (nicht eigensichere) Steuergerät 20 abzuschalten, eigensicher ist, d. h., im Betrieb des ersten Steuergeräts 10 muß dessen korrekte Funktion sichergestellt sein. Um dies zu gewährleisten, ist die zweite Betriebsebene, nämlich die Überwachung der Steuerfunktion des Steuergeräts 10 mittels der Überwachungsebene (Überwachung SG10) vorgesehen. Wird also ein Fehlerzustand des Steuergeräts 20 erkannt, führt dies in der Überwachungsfunktion des zweiten Steuergeräts 20 in dem ersten Steuergerät 10 zu einem Notlaufbetrieb des zweiten Steuergeräts.

Wird ein derartiges Überwachungskonzept verwirklicht, besteht eine Funktionseinschränkung des ersten Steuergeräts 10 insofern, als wenn das erste Steuergerät 10 aufgrund eines Fehlers abschaltet, im Fehlerfall des zweiten Steuergeräts 20 nicht mehr sichergestellt ist, daß das Steuergerät 10 den aktuell sicheren Zustand ansteuern bzw. regeln kann. Es ist hier beispielsweise möglich, das zweite Steuergerät 20 in einen beschränkten Betrieb zu überführen, d. h., das zweite Steuergerät 20 bewegt sich nur in Betriebspunkten, in welchen das Abschalten im Fehlerfall einen sicheren Zustand bedeutet.

Da beim Abschalten des ersten Steuergeräts 10 die externe Absicherung des Betriebs des zweiten Steuergeräts 20 nicht mehr sichergestellt ist (da die Überwachungsfunktion des zweiten Steuergeräts im ersten Steuergerät 10 läuft), ist der sichere Betrieb des zweiten Steuergeräts 20 nicht mehr gewährleistet. Es ist dann vorgesehen, daß das zweite Steuergerät 20 den aktuellen sicheren Zustand ansteuert und sich dann abschaltet.

Für zusammengesetzte Einheiten (Triebstrang), die einen gemeinsamen sicheren Zustand aktiv ansteuern müssen, ist es vorteilhaft, diese Einheiten über eine zentrale Notlaufleitung (nicht dargestellt) zu verbinden. Arbeiten alle Steuergeräte im Normalbetrieb, versorgt keines dieser Steuergeräte diese Notlaufleitung. Erkennt eines der Steuergeräte jedoch einen Fehler, schaltet es sich ab und versorgt dadurch diese Notlaufleitung. In einem Steuergerät wird diese Leitung inaktiv versorgt, d. h. die Versorgung der Notlaufleitung muß das Steuergerät im Normalbetrieb aktiv unterdrücken.

Die Aktuatorik, welche mit dieser Notlaufleitung verbunden ist, fährt in Notlaufposition, wenn die Notleitung angesteuert wird. Eine Ansteuerung durch das angeschlossene Steuergerät hat keinen Einfluß auf die Aktuatorik, das Steuergerät hat eine niedrigere Priorität. Diese Notlaufstrategie wird vorzugsweise in Hardware realisiert, da hierdurch eine höhere Zuverlässigkeit gegeben ist.

Die Anbindung des dargestellten Systems an eine Aktuatorik ist schematisch mittels der Pfeile P und einer mit 16 bezeichneten, beliebig ausgebildeten Aktuatorik dargestellt. Es ist bevorzugt, die Betätigung der Aktuatorik 16 als Wired-Or-Funktion auszubilden, d.h. bei Vorliegen eines Niedrigpegelsignals (bzw. "AUS"-Signals) auf einem der beiden Steuergeräte kann ein Abschalten der Aktuatorik eingeleitet werden. Mit anderen Worten, wenn eines der Steuergeräte ein Niedrigpegelsignal auf die Aktuatorik gibt, wird diese ausgeschaltet. Es sind ebenfalls weitere alternative Ansteuerungen der Aktuatorik denkbar. Durch eine redundante Sensorik des Steuergerätes 10 ist es ebenfalls möglich, unterschiedlich sichere Zustände einer der z.B. dem Steuergerät 20 zugeordneten Aktuatorik anzusteuern. Im Stand der Technik werden beispielsweise Signale von verschiedenen Steuergeräten redundant eingelesen und über einen Kommunikationskanal (beispielsweise CAN) ausgetauscht, um Signale redundant zu plausibilisieren. Ein derartiges Wissen ist im Steuergerät 10 verwendbar, um im Fehlerfall des Steuergerätes 20 den für den aktuellen Betriebspunkt des Steuergerätes 20 sicheren Zustand einzustellen.

Eine besondere Fähigkeit der dargestellten Topologie besteht in der Fähigkeit des Steuergeräts 10, zwischen repetierenden und sporadischen Fehlern des Steuergeräts 20 zu unterscheiden. Auf der Grundlage dieser Fähigkeit können entsprechende unterschiedliche Gegenmaßnahmen eingeleitet werden, beispielsweise kann bei Erkennen eines sporadischen Fehlers das Steuergerät 20 kurz abgeschaltet werden, während bei Erkennen eines repetierenden Fehlers ein Abschalten des Steuergeräts 20 bis zu dem Zeitpunkt, an dem die Zündung des Kraftfahrzeugs ausgeschaltet ist, erfolgen kann.

Erfindungsgemäß ist, dadurch, daß das Abschalten durch ein separates Steuergerät durchgeführt wird, leichter möglich, auch aktiv sichere Zustände des zweiten Steuergeräts anzusteuern. Zum Beispiel kann das Steuergerät 10 durch Abschalten des Steuergeräts 20 und einfaches Ansteuern der wesentlichen Aktuatorik des Steuergeräts 20 einen sicheren Zustand für das Gesamtsystem erzielen. Der Grund liegt in der bereits redundanten Hardware des Steuergeräts 10. Ein als Standalone ausgebildetes Steuergerät 20 könnte in vielen Fehlerfällen keinen sicheren Zustand aktiv einstellen, ohne erheblichen redundanten Hardwareeinsatz.

Dieser Sachverhalt ist in Figur 2 schematisch dargestellt. Es wird hier zwischen Betriebspunkten mit sicherem Zustand 1 im Fehlerfall, und Betriebspunkten mit sicherem Zustand 2 im Fehlerfall unterschieden. Im Falle eines festgestellten Fehlers bei Vorliegen eines Betriebspunktes mit sicherem Zustand 1 wird im Fehlerfall ein sicherer Zustand 1 durch aktives Ansteuern einer Aktuatorik bewirkt. Bei Auftreten eines Fehlers während eines Betriebspunktes mit sicherem Zustand 2 wird ein sicherer Zustand 2 durch Abschalten der Aktuatorik bzw. des Systems bewirkt. Dies sei anhand eines Beispiels erläutert: tritt beispielsweise während einer geschlossenen Kupplung ein Fehler auf, ist ein einfaches Abschalten des Systems aus Sicherheitsgründen nicht möglich. Es ist vielmehr notwendig, durch aktives Ansteuern (sicherer Zustand 1) die Kupplung aufzufahren.

## Patentansprüche

1. System zur Steuerung und/oder Überwachung eines wenigstens zwei Steuergeräte aufweisenden Steuergeräteverbundes, mit einem ersten Steuergerät (10) und wenigstens einem zweiten Steuergerät (20), wobei das erste Steuergerät (10) mit Mitteln (14) zur Durchführung seiner Steuerfunktion und zur Überwachung dieser Steuerfunktion, sowie mit Mitteln (14) zur Überwachung der Steuerfunktion des wenigstens einen zweiten Steuergeräts (20) ausgebildet ist, **dadurch gekennzeichnet, dass** das erste Steuergerät (10) einen Mikrocomputer aufweist, bei dem wenigstens zwei zumindest außerhalb des Fehlerfalls voneinander unabhängige Betriebsebenen vorgesehen sind, wobei in einer ersten Ebene die Steuerungsfunktion und Überwachungsfunktion des ersten Steuergeräts (10), und in einer zweiten Ebene die Überwachungsfunktion für das wenigstens eine zweite Steuergerät (20) durchgeführt wird.

2. System nach der Anspruch 1, **dadurch gekennzeichnet, dass** eine dritte Betriebsebene vorgesehen ist, welche die Funktionsweise des ersten Steuergeräts (10) durch Überwachung der die Überwachung durchführenden zweiten Betriebsebene überprüft.

3. System nach Anspruch 1, **gekennzeichnet durch** Sensoren (15), welche im Normalzustand als redundante Sensoren für das wenigstens eine zweite Steuergerät (20) dienen, und bei Erkennen einer Fehlfunktion des wenigstens einen zweiten Steuergeräts dem ersten Steuergerät (10) zur Gewährleistung einer Notlauffunktion bezüglich einer Normalzustand- Steuerfunktion des wenigstens einen zweiten Steuergeräts zuordenbar sind.

4. System nach einem der vorstehenden Ansprüche, **dadurch gekennzeichnet, dass** mittels des Mikrocomputers (14) des ersten Steuergeräts (10) die Einleitung von Sicherheits- oder Notmassnahmen ermöglicht wird, wobei diese Sicherheits- oder Notmassnahmen insbesondere die Abschaltung der Aktuatorik des wenigstens einen zweiten Steuergeräts (20) und/oder die Abschaltung des wenigstens einen zweiten Steuergeräts (20) umfassen.

5. System nach einem der vorstehenden Ansprüche, **gekennzeichnet durch** eine zentrale Notlaufsignalleitung, welche im Falle einer Fehlfunktion eines Steuergeräts ansteuerbar ist.

6. Verfahren zur Steuerung und/oder Überwachung eines wenigstens zwei Steuergeräte aufweisenden Steuergeräteverbundes, wobei eine erste Steuerfunktion der Antriebseinheit mittels eines ersten Steuergeräts (10), und wenigstens eine zweite Funktion der Antriebseinheit mittels wenigstens eines zweiten Steuergeräts (20) gesteuert wird, wobei die Steuerfunktion des ersten Steuergeräts (10), eine Überwachung der Steuerfunktion des ersten Steuergeräts sowie eine Überwachung der wenigstens einen Steuerfunktion des wenigstens einen zweiten Steuergeräts (20) mittels des ersten Steuergeräts (10) durchgeführt wird, **dadurch gekennzeichnet, dass** das erste Steuergerät (10) einen Mikrocomputer aufweist, bei dem wenigstens zwei zumindest außerhalb des Fehlerfalls voneinander unabhängige Betriebsebenen vorgesehen sind, wobei in einer ersten Ebene die Steuerungsfunktion und Überwachungsfunktion des ersten Steuergeräts (10), und in einer zweiten Ebene die Überwachungsfunktion für das wenigstens eine zweite Steuergerät (20) durchgeführt wird.

## Claims

1. System for controlling and/or monitoring a controller grouping which has at least two controllers, having a first controller (10) and at least a second controller (20), wherein the first controller (10) is embodied with means (14) for carrying out its control function and for monitoring this control function, and with means (14) for monitoring the control function of the at least one second controller (20), **characterized in that** the first controller (10) has a microcomputer in which at least two operating levels which are independent of one another are provided outside the case of a fault, wherein the control function and monitoring function of the first controller (10) are carried out in a first level and the monitoring function for the at least one second controller (20) is carried out in a second level.

2. System according to Claim 1, **characterized in that** a third operating level is provided which checks the method of functioning of the first controller (10) by monitoring the second operating level which carries out the monitoring.

3. System according to Claim 1, **characterized by** sensors (15) which in the normal operating state serve as redundant sensors for the at least one second controller (20), and when a malfunction of the at least one second controller is detected they can be assigned to the first controller (10) in order to ensure an emergency operating function with respect to a normal state control function of the at least one second controller.

4. System according to one of the preceding claims, **characterized in that** the initiation of safety measures or emergency measures is made possible by means of the microcomputer (14) of the first controller (10), wherein these safety measures or emergency measures comprise, in particular, switching off the actuator system of the at least one second controller (20) and/or switching off the at least one second controller (20).

5. System according to one of the preceding claims, **characterized by** a central emergency operating signal line which can be actuated in the case of a malfunction of a controller.

6. Method for controlling and/or monitoring a controller grouping which has at least two controllers, wherein a first control function of the drive unit is controlled by means of a first controller (10), and at least one second function of the drive unit is controlled by means of at least one second controller (20), wherein the control function of the first controller (10), monitoring of the control function of the first controller and monitoring of the at least one control function of the at least one second controller (20) are carried out by means of the first controller (10), **characterized in that** the first controller (10) has a microcomputer in which at least two operating levels which are independent of one another at least when there is no fault are provided, wherein the control function and monitoring function of the first controller (10) are carried out in a first level, and the monitoring function for the at least one second controller (20) is carried out in a second level.

## Revendications

1. Système de commande et/ou de surveillance d'un ensemble d'appareils de commande comprenant au moins deux appareils de commande, à savoir un premier appareil de commande (10) et au moins un second appareil de commande (20),
le premier appareil de commande (10) comportant des moyens (14) pour effectuer une fonction de commande et la surveiller ainsi que des moyens (14) pour surveiller la fonction de commande d'au moins un second appareil de commande (20),
**caractérisé en ce que**
le premier appareil de commande (10) comporte un micro-ordinateur ayant au moins deux plans de fonctionnement indépendamment l'un de l'autre, sauf en cas d'incident, et
dans un premier plan de fonctionnement, on effectue la fonction de commande et la fonction de surveillance du premier appareil de commande (10) et dans un second plan de fonctionnement, on effectue la fonction de surveillance au moins du second appareil de commande (20).

2. Système selon la revendication 1,
**caractérisé par**
un troisième plan de fonctionnement qui vérifie le mode de fonctionnement du premier appareil de commande (10) par la surveillance du second plan de fonctionnement qui effectue la surveillance.

3. Système selon la revendication 1,
**caractérisé par**
des capteurs (15) qui, à l'état normal, servent de capteurs redondants pour au moins un second appareil de commande (20) et qui à la détection d'un fonctionnement erroné au moins d'un second appareil de commande sont associés au premier appareil de commande (10) pour assurer la fonction de fonctionnement de secours par rapport à la fonction de commande de l'état normal au moins du second appareil de commande.

4. Système selon les revendications précédentes,
**caractérisé en ce que**
le micro-ordinateur (14) du premier appareil de commande (10) permet la mise en oeuvre de mesures de sécurité ou de secours, ces mesures de sécurité ou de secours comprenant notamment la coupure des moyens d'actionnement au moins du second appareil de commande (20) et/ou la coupure au moins du second appareil de commande (20).

5. Système selon les revendications précédentes,
**caractérisé par**
une ligne centrale de transmission de signal de fonctionnement de secours mise en oeuvre en cas de défaut de fonctionnement d'un appareil de commande.

6. Procédé de commande et/ou de surveillance d'un ensemble d'appareils de commande comprenant au moins deux appareils de commande, une première fonction de commande de l'unité d'entraînement étant commandée par un premier appareil de commande (10) et au moins une seconde fonction de l'unité d'entraînement étant commandée par au moins un second appareil de commande (20),
la fonction de commande du premier appareil de commande (10) assurant la surveillance de la fonction de commande du premier appareil de commande ainsi que la surveillance d'au moins une fonction de commande d'au moins un second appareil de commande (20) à l'aide du premier appareil de commande (10),
**caractérisé en ce que**
le premier appareil de commande (10) comporte un micro-ordinateur avec au moins deux plans de fonctionnement indépendants l'un de l'autre sauf en cas d'incident, et dans un premier plan de fonctionnement, on effectue la fonction de commande et la fonction de surveillance du premier appareil de commande (10) et dans un second plan de fonctionnement, on effectue la fonction de surveillance pour au moins un second appareil de commande (20).
